# DEMANDE DE BREVET EUROPEEN

(11) **EP 0 635 411 A1**
(43) Date de publication de la demande: **25.01.1995**
(21) Numéro de dépôt: 94111311.0
(22) Date de dépôt: 20.07.1994
(51) Int. Cl.: B60S 1/38

(54) **Dispositif de protection pour balai d'essuie-glace**

(30) Priorité: 22.07.1993 FR 9309040
(71) Demandeur: VALEO SYSTEMES D'ESSUYAGE, 78180 Montigny-Le-Bretonneux (FR)
(72) Inventeur: Enouf, Jean-Pierre, F-86100 St. Sauveur (FR)
(74) Mandataire: Gamonal, Didier

(57) **Abrégé**

La présente invention concerne un étui de protection pour balai d'essuie-glace (1) comportant des griffes (12) de maintien de la lèvre d'essuyage (2), ledit étui de protection (13) présentant une forme tubulaire dont la section est sensiblement en "V", et présentant deux ailes longitudinales (14, 15) divergentes munies de griffes (17, 18) propres à coopérer avec des rainures latérales (5, 6) prévues sur la lame (1) du balai d'essuie-glace, caractérisé en ce que au moins la partie supérieure de l'étui (13) portant les griffes longitudinales (17,18) est réalisée en un matériau rigide, et en ce que lesdites ailes (14, 15) sont prolongées par des doigts (21, 22) s'étendant sensiblement parallèlement au plan de symétrie médian (27) de l'étui de protection, lesdits doigts (21, 22) étant disposées de part et d'autre de l'étui de protection de façon à recouvrir les griffes de maintien (12) de la lèvre (2).

## Description

La présente invention concerne un dispositif de protection pour balai d'essuie-glace.

On connaît dans l'état de la technique de tels dispositifs de protection, constitués par un étui de forme tubulaire, réalisés en un matériau rigide ou semirigide, et présentant une section propre à recouvrir un balai d'essuie-glace et présentant des bords latéraux susceptibles de s'encastrer dans les rainures longitudinales du balai pour assurer le maintien provisoire pendant le stockage du véhicule.

A titre d'exemple, le brevet français n° 2.476.005 décrit un balai d'essuie-glace présentant des griffes latérales pour la mise en place sur le balai d'essuie-glace, et une bande souple agissant comme la lèvre d'essuyage d'un balai d'essuie-glace, et permettant occasionnellement le nettoyage du pare-brise sans qu'il soit nécessaire de retirer le dispositif de protection.

Le dispositif selon l'état de la technique présente toutefois l'inconvénient d'avoir la possibilité de sortir de son logement du fait des contraintes mécaniques s'exerçant lors de l'essuyage du pare-brise sec.

Dans ce cas, les frottements s'exerçant entre la bande souple et le pare-brise sont relativement importants, et tendent à faire basculer l'étui de protection par rapport au balai d'essuie-glace.

La remise en place de l'étui de protection implique une intervention manuelle augmentant le temps de préparation d'un véhicule pendant la phase de stockage ou de préparation du véhicule pour la vente.

La présente invention a pour objet un dispositif de protection d'un balai d'essuie-glace, visant à remédier à cet inconvénient.

A cet effet, l'invention concerne plus particulièrement un étui de protection pour balai d'essuie-glace comportant des griffes de maintien de la lèvre d'essuyage, ledit étui de protection présentant une forme tubulaire dont la section est sensiblement en "V", et présentant deux ailes longitudinales divergentes munies de griffes propres à coopérer avec des rainures latérales prévues sur la lame du balai d'essuie-glace, caractérisé en ce qu'au moins la partie supérieure de l'étui portant les griffes longitudinales est réalisée en un matériau rigide, et en ce que lesdites ailes sont prolongées par des doigts s'étendant sensiblement parallèlement au plan de symétrie médian de l'étui de protection, lesdits doigts étant disposées de part et d'autre de l'étui de protection de façon à recouvrir les griffes de maintien de la lèvre.

Les doigts empêchent le basculement de l'étui de protection par rapport au balai d'essuie-glace, et permettent ainsi l'utilisation de l'essuie-glace pour le nettoyage du pare-brise, pendant le stockage du véhicule.

Avantageusement, la forme et les dimensions des doigts sont sensiblement identiques à la forme et aux dimensions des flancs latéraux des griffes de liaisons avec les palonniers.

Selon une première variante, les doigts présentent une première partie plane sensiblement parallèle au plan longitudinal médian prolongée par une languette longitudinale inclinée, la hauteur de la première partie plane étant sensiblement égale à la hauteur des griffes de maintien.

Selon une deuxième variante, la bande supérieure des doigts présente un épaulement dirigé vers le plan de symétrie médian, ledit épaulement assurant le clipsage du doigt sur la griffe.

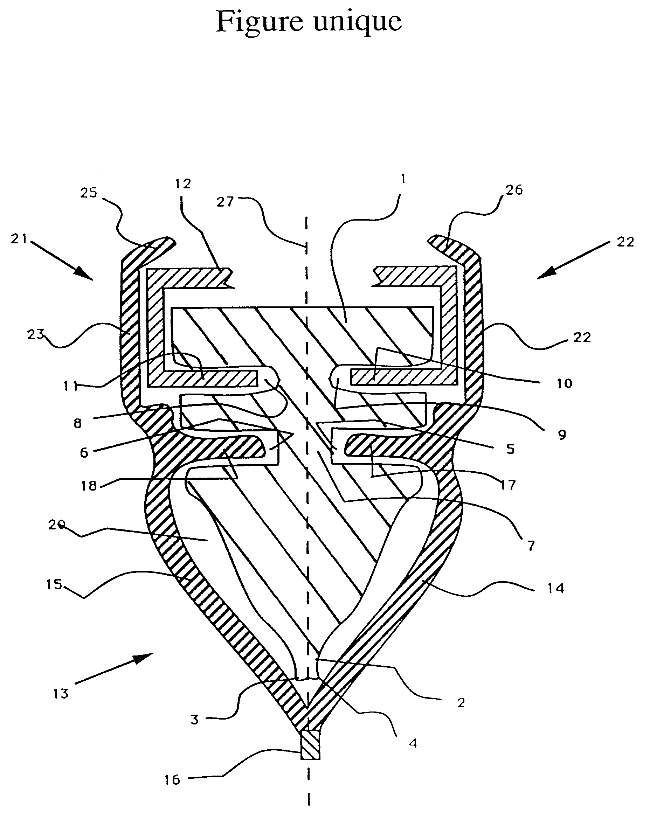

L'invention sera mieux comprise à la lecture de la description qui suit, faisant références aux dessins annexés où la figure unique représente une vue d'un étui de protection selon l'invention selon un plan de coupe transversale.

Le balai d'essuie-glace 1 est de type connu. Il comporte une lèvre d'essuyage 2 présentant deux arêtes 3, 4 assurant le nettoyage du pare-brise, et un corps présentant une première paire de rainures longitudinales 5, 6 déterminant entre-elles une âme souple 7 autorisant le basculement de la lèvre 2 alternativement d'un coté et de l'autre, et une deuxième paire de rainures longitudinales supérieures 8, 9 destinées à recevoir les ailes longitudinales 10, 11 des griffes 12 assurant la liaison avec les palonniers faisant partie de la monture porteuse de la lame formant avec cette dernière un balai d'essuie-glace.

Le balai d'essuie-glace est entouré par un étui de protection tubulaire 13 amovible. Cet étui de protection 13 présente une section en "V" et est réalisé en un matériau rigide tel que du PVC. Il présente deux ailes longitudinales 14, 15 convergentes se rejoignant à la partie inférieure, du coté de la lèvre d'essuyage 2. Une bande souple 16 prolonge l'étui au niveau de la jonction des deux ailes longitudinales 14, 15. Cette bande souple 16 permet de conférer à l'étui de protection une capacité d'essuyage et de nettoyage, évitant ainsi de retirer l'étui de protection pour une utilisation occasionnelle avant le destockage effectif du véhicule.

A l'extrémité opposée à cette bande souple 16, les ailes longitudinales 14, 15 présentent des griffes longitudinales 17, 18 dirigées l'une vers l'autre et venant se loger dans la première paire de rainures 5, 6.

Lorsque l'étui 13 est en position, il délimite autour du balai d'essuie-glace 1 un espace vide 20 assurant la protection de la lèvre d'essuyage 2.

Les ailes 14, 15 se prolongent dans la direction opposée à leur jonction par deux doigts 21, 22. Ces doigts 21, 22 recouvrent les griffes 12 de liaison avec les palonniers. Ils présentent une première joue plane 23, 24 sensiblement parallèle au plan de symétrie médian 27. Ces joues planes 23, 24 présentent une hauteur correspondant sensiblement à la hauteur des griffes 12 de liaison avec les palonniers. Elles sont prolongées par des languettes inclinées 25, 26 dirigées l'une contre l'autre. La longueur de ces languettes inclinées 25, 26 est déterminée de façon à permettre une mise en place de l'étui par déformation élastique de la partie supérieure de l'étui 13. Les doigts 21, 22 sont maintenus sur les griffes 12 de liaison avec les palonniers par clipsage. Elles empêchent le basculement de l'étui par rapport au balai d'essuie-glace 7.

Les doigts 21, 22 peuvent s'étendre sur toute la longueur de l'étui 13, de façon à permettre la fabrication par extrusion. Ils peuvent également être constitués par des parties saillantes dont la longueur correspond sensiblement à la longueur des griffes 12.

L'invention est décrite dans ce qui précède à titre d'exemple non limitatif. Il est bien entendu que l'Homme de Métier sera à même de réaliser différentes variantes sans pour autant sortir du cadre de l'invention.

## Revendications

1. Étui de protection pour balai d'essuie-glace (1) comportant des griffes (12) de maintien de la lèvre d'essuyage (2), ledit étui de protection (13) présentant une forme tubulaire dont la section est sensiblement en "V", et présentant deux ailes longitudinales (14, 15) divergentes munies de griffes (17, 18) propres à coopérer avec des rainures latérales (5, 6) prévues sur la lame (1) du balai d'essuie-glace, caractérisé en ce que au moins la partie supérieure de l'étui (13) portant les griffes longitudinales (17,18) est réalisée en un matériau rigide, et en ce que lesdites ailes (14, 15) sont prolongées par des doigts (21, 22) s'étendant sensiblement parallèlement au plan de symétrie médian (27) de l'étui de protection, lesdits doigts (21, 22) étant disposées de part et d'autre de l'étui de protection de façon à recouvrir les griffes de maintien (12) de la lèvre (2).

2. Étui de protection pour balai d'essuie-glace selon la revendication 1, caractérisé en ce que la forme et les dimensions des doigts (21, 22) sont sensiblement identiques à la forme et aux dimensions des flancs latéraux des griffes (12) de liaison avec les palonniers.

3. Étui de protection pour balai d'essuie-glace selon la revendication 1 caractérisé en ce que les doigts (21, 22) présentent une première joue plane (23, 24) sensiblement parallèle au plan longitudinal médian (27) prolongée par une languette longitudinale inclinée (25, 26), la hauteur de la première joue plane (23, 24) étant sensiblement égale à la hauteur des griffes de maintien.

4. Étui de protection pour balai d'essuie-glace selon la revendication 1 caractérisé en ce que la bande supérieure des doigts (21, 22) présente un épaulement (25,26) dirigé vers le plan de symétrie médian, ledit épaulement assurant le clipsage du doigt sur la griffe.
